# EUROPEAN PATENT SPECIFICATION

(11) **EP 3 619 998 B1**
(45) Date of publication and mention of the grant of the patent: **20.12.2023**
(21) Application number: 17908562.6
(22) Date of filing: 05.05.2017
(51) Int. Cl.: H04W 72/04, H04W 72/54

(54) **REDUCTION OF TRANSMISSION INTERFERENCE**
VERRINGERUNG DER ÜBERTRAGUNGSINTERFERENZ
RÉDUCTION D'INTERFÉRENCES DE TRANSMISSION

(43) Date of publication of application: 11.03.2020
(73) Proprietor: ZTE Corporation, Shenzhen, Guangdong 518057 (CN)
(72) Inventor: YANG, Ling, Shenzhen Guangdong 518057 (CN); ZHAO, Yajun, Shenzhen Guangdong 518057 (CN); LI, Xincai, Shenzhen Guangdong 518057 (CN); XU, Hanqing, Shenzhen Guangdong 518057 (CN)
(74) Representative: Vossius & Partner Patentanwälte Rechtsanwälte mbB
(86) International application number: PCT/CN2017/083345
(87) International publication number: WO 2018/201492

(56) References cited:
- CN-A- 1 719 928
- CN-A- 101 132 200
- US-A1- 2015 092 703
- US-A1- 2015 092 703
- US-A1- 2015 358 139
- US-A1- 2016 021 011
- US-A1- 2017 013 605
- US-A1- 2017 111 160

## Description

### TECHNICAL FIELD

This patent document is directed generally to wireless communications.

### BACKGROUND

The mobile communication technologies are moving the world toward an increasingly connected and networked society. In comparison with the existing wireless networks, the next generation systems and wireless communication techniques will need to support a much wider range of use-case characteristics and provide a much more complex range of access requirements and flexibilities.

US 2017/111160 A1 relates to a device for wireless communication. The wireless device identifies an uplink/downlink (UL/DL) configuration that defines subframe configuration options for each subframe of a frame. The UL/DL configuration establishes parameters for time division duplexing (TDD) operation between a base station and a user equipment (UE). The wireless device determines a constraint for a subframe of the frame based on the UL/DL configuration and then determines an adaptive subframe configuration based on the constraint. The adaptive subframe configuration includes one or several downlink symbol periods and one or several uplink symbol periods. The wireless device communicates during the subframe according to the adaptive subframe configuration rather than the original UL/DL configuration.

US 2015/358139 A1 relates to methods for measuring CSI. The method comprises: a terminal device determining whether a subframe a channel state information interference measurement resource is located on is a downlink subframe; when the subframe where the channel state information interference measurement resource is located is a downlink subframe, the terminal device executing interference measurement by using the channel state information interference measurement resource.

US 2015/092703 A1) relates to techniques for configuring an adaptive frame structure for wireless communications systems using unlicensed radio frequency spectrum. A base station (BS) determines whether another device is transmitting on a channel in the unlicensed radio frequency spectrum or one or more other network conditions pertaining to the channel, determines a frame structure from a plurality of frame structures used for data communications based at least in part on the one or more network conditions, wherein each of the plurality of frame structures has a different frame duration, and communicates with a user equipment (UE) using the determined frame structure. A UE determines a frame structure from a plurality of frame structures used for data communications, wherein each of the plurality of frame structures has a different frame duration, and communicates with a BS using the determined frame structure.

US 2017/013605 A1 relates to a method, an apparatus, and a computer program product for wireless communication. The apparatus receives a D2D resource message based on a change in an uplink-downlink subframe configuration of at least one frame. The D2D resource message enables the apparatus to determine D2D resources allocated for D2D transmissions after the change in the uplink-downlink subframe configuration. The apparatus determines a subset of the D2D resources to be used for performing D2D transmissions based on the received D2D resource message.

### SUMMARY

This patent document relates to techniques, systems, and devices for reducing interference in wireless communications, including interference between base stations and/or mobile stations.

The invention is specified by the independent claims. Preferred embodiments are defined in the dependent claims.

In one exemplary aspect, a wireless communication method is disclosed. The method comprises transmitting, in a transmission that includes one or more slots, a message indicative of a change to a property of transmission, wherein the change forms a changed structure for a slot in the one or more slots based on a predetermined structure for the slot; and using the changed structure for the slot for subsequent transmission.

In another exemplary aspect, a wireless communication method is disclosed. The method comprises receiving, in a transmission that includes one or more slots, a message indicative of a change to a property of transmission, wherein the change forms a changed structure for a slot in the one or more slots based on a predetermined structure for the slot; and using the changed structure for the slot for subsequent transmission.

In yet another exemplary aspect, a wireless communication base station is disclosed. The wireless communication base station comprises a memory that stores instructions for operations of the base station, and a processor in communication with the memory and operable to execute the instructions to cause the base station to transmit, in a transmission that includes one or more slots, a message indicative of a change to a property of transmission, wherein the change forms a changed structure for a slot in the one or more slots based on a predetermined structure for the slot; and use the changed structure for the slot for subsequent transmission.

In yet another exemplary aspect, a wireless communication mobile station is disclosed. The wireless communication mobile station comprises a memory that stores instructions for operations of the mobile station, and a processor that is in communication with the memory and operable to execute the instructions to cause the mobile station to receive, in a transmission that includes one or more slots, a message indicative of a change to a property of transmission, wherein the change forms a changed structure for a slot in the one or more slots based on a predetermined structure for the slot; and use the changed structure for the slot for subsequent transmission.

The above and other aspects and their implementations are described in greater detail in the drawings, the description and the claims.

### BRIEF DESCRIPTION OF THE DRAWINGS

FIG. 1 shows an exemplary diagram for possible crosslink interference that can happen between base stations and user equipment.
FIG. 2A shows an exemplary diagram of a preliminary slot structure.
FIG. 2B shows another exemplary diagram of a preliminary slot structure.
FIG. 2C shows another exemplary diagram of a preliminary slot structure.
FIG. 2D shows another exemplary diagram of a preliminary slot structure.
FIG. 3A illustrates some exemplary uplink (UL)-only and UL-dominant slot structures.
FIG. 3B illustrates some exemplary downlink (DL)-only and DL-dominant slot structures.
FIG. 4A shows an exemplary scenario when a base station decides a slot structure for its subsequent transmission based on information obtained from its adjacent base stations.
FIG. 4B shows an exemplary scenario when a base station decides a slot structure for its subsequent transmission.
FIG. 4C shows another exemplary scenario when a base station decides a slot structure for its subsequent transmission.
FIG. 4D shows yet another exemplary scenario when a base station decides a slot structure for its subsequent transmission.
FIG. 4E shows an exemplary scenario when a base station adds a sensing and/or measurement operation to its slot structure for subsequent transmission.
FIG. 4F shows another exemplary scenario when a base station adds a sensing and/or measurement operation to its slot structure for subsequent transmission.
FIG. 5A shows an exemplary sequence of operations that can be performed by a base station for downlink-dominant transmissions.
FIG. 5B shows an exemplary sequence of operations that can be performed by a base station and its corresponding user equipment for uplink-dominant transmissions.
FIG. 6A shows an exemplary change to the slot structure that postpones the DL data transmission.
FIG. 6B shows an exemplary message that indicates a preliminary structure.
FIG. 7 shows an example of a wireless communication system where techniques in accordance with one or more embodiments of the present technology can be applied.
FIG. 8 is a block diagram representation of a portion of a radio station.
FIG. 9 is a flowchart representation of a method of wireless communication.
FIG. 10 is a flowchart representation of another method of wireless communication.

### DETAILED DESCRIPTION

The rapid growth of mobile communications and advances in technology demand for greater capacity and higher data rates. Other aspects, such as energy consumption, device cost, spectrum resource allocation, and latency are also important to the success of future networks.

Currently, various implementations for Long Term Evolution (LTE) tend to support a small number of frame structure types. For LTE Frame Structure (FS) Type 1 that is applicable to frequency domain division (FDD), all ten subframes are available for either uplink or downlink transmission. On the other hand, LTE FS Type 2 is applicable to time domain division (TDD), and every subframe can be used as an uplink subframe, a downlink subframe, or a special subframe. These two types of frame structures under most existing implementations, however, are not adapted to dynamic and, often unpredictable, changes in the mobile traffic and the network load. The disclosed technology in this patent document can be used to provide flexible duplex, in which spectrum resources are dynamically assigned to, to enable higher bandwidth for transmissions and is suitable for dynamic traffic conditions, including small-cell deployments in which terminal and network transmission power are similar, and strict isolation of the uplink and downlink across cell borders is less important.

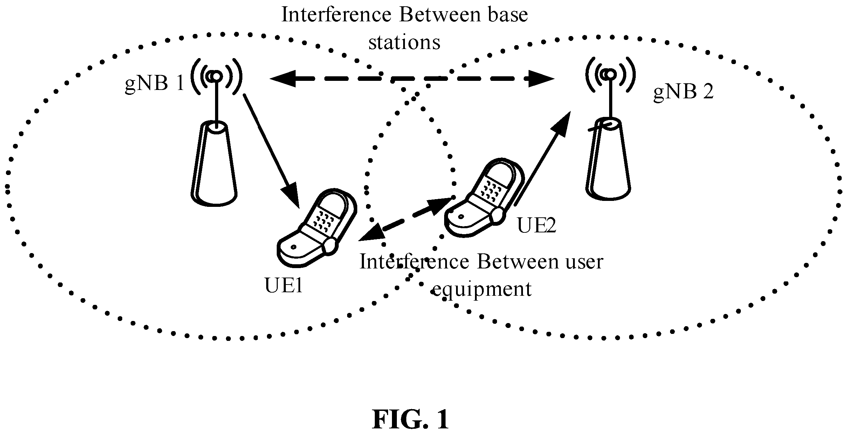

Notably, the disclosed technology can be implemented in various ways to address or mitigate crosslink interference problems in flexible configurations of spectrum resources. FIG. 1 shows an exemplary diagram for possible crosslink interference that happens between base stations and user equipment. For example, as shown in FIG. 1, one Next Generation NodeB (gNodeB), gNB1, performs predominantly downlink transmission. Another neighboring gNodeB, gNB2, performs predominantly uplink transmission using the same or overlapping spectrum resources. The use of different transmission directions on the same or overlapping spectrum resources by these two neighboring cells results in crosslink interference that can cause a significant decline in system performance. In this particular case, the crosslink interference can be both interference between the user equipment (UE1 and UE2) and interference between the two base stations (gNB1 and gNB2). For example, from the transmitting cell gNB1's perspective, the neighboring cell gNB2 accepts uplink transmission from UE2 to interfere with its downlink transmission. Similarly, from the transmitting node UE2's perspective, the neighboring cell gNB1 transmits downlink information to UE1 to interfere with its uplink transmission.

The disclosed technology in this patent document can be implemented in to provide techniques and methods for reducing or minimizing the impact of transmission interferences including, e.g., crosslink interference. It can also be applied to other types of interference problems present in the network. For example, the disclosed technology can also be applied to small-cell deployments and networks and user equipment based on full-duplex communications with simultaneous transmission and reception on the same carrier.

In the following, specific examples with various levels of details are set forth to illustrate aspects of the presently disclosed technology.

The specifics in the described examples as should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

### Adaptive Slot Structure

One aspect of the disclosed technology is to replace a fixed number of frame structures in some existing implementations of the LTE technology with an adaptive slot structure that contains various segments in time that may be modified or changed as needed, e.g., such a change in the slot structure can be made in response to an adverse interference condition for a particular transmission at a particular time or in response to a command or request. The slot structure can be represented by a variety of parameters, and communicated to user equipment from a corresponding base station. By changing the parameters, the slot structure can be adaptively altered or adjusted. For example, some parameters can be used to indicate the start positions and/or number of time-domain symbols occupied by the components. When these parameters are changed, the positions of the components in a slot can be adjusted. In some implementations, parameters can also be used to indicate what components are included in a slot. Changes to such parameters can introduce new components, remove existing components, or adding add various operations in a slot to change the structure of the slot. The use of an adaptive slot structure allows the slot structure to be fully compatible with the current frame structures used in LTE and thus is applicable to both FDD and TDD scenarios.

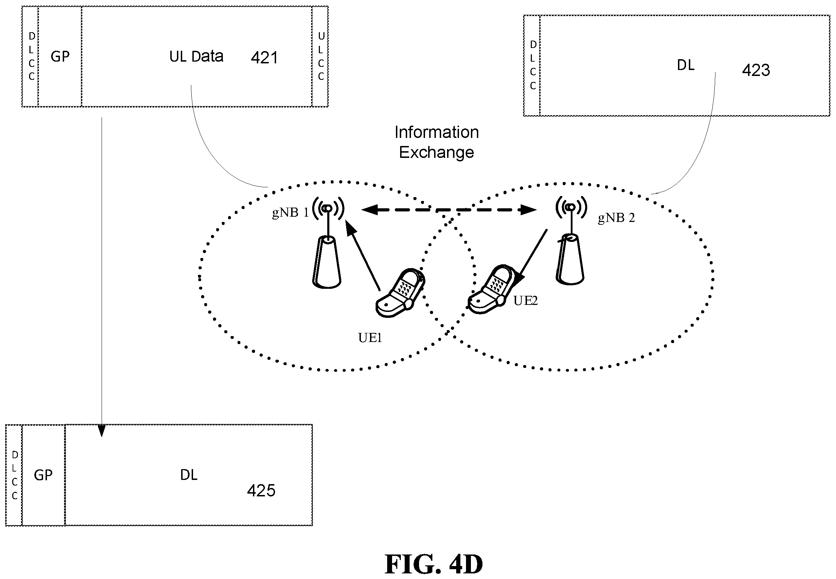

For instance, a gNodeB can first send a message to its UEs to indicate a preliminary slot structure. The message can be transmitted via Radio Resource Control (RRC) protocol, or as a part of downlink control information (DCI) such as downlink DCI, uplink DCI, or Common DCI, via Physical Downlink Control Channel (PDCCH) or Enhanced Physical Downlink Control Channel (ePDCCH). The message can include parameters that indicate one or more components to be included in the slot structure. Some examples of the components that can be included in the slot structure are: downlink (DL) control channel (CC), downlink data, uplink (UP) control channel (CC), uplink data, and gap. Some additional components, such as a sensing and/or measurement operation field in connection with sensing of the interference level can also be included in such slot structure. Details regarding the sensing and/or measurement operation field will be discussed in detail in connection with FIG. 4D to FIG. 6.

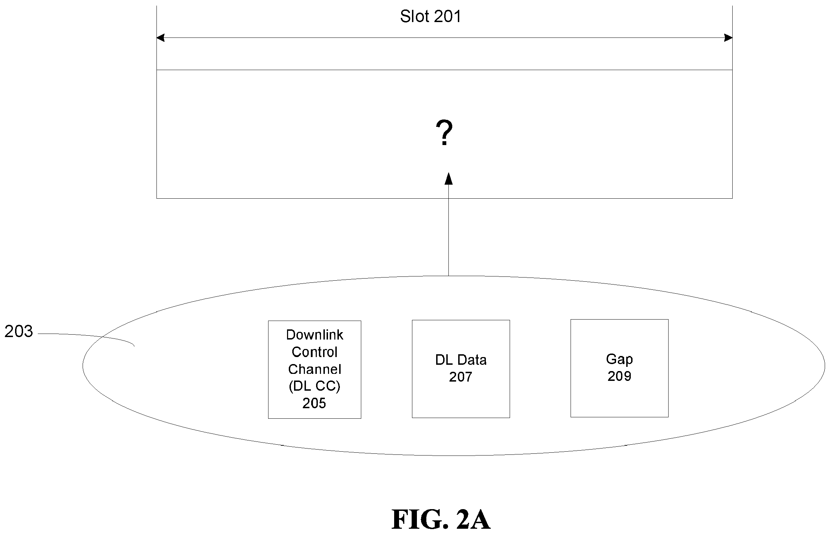

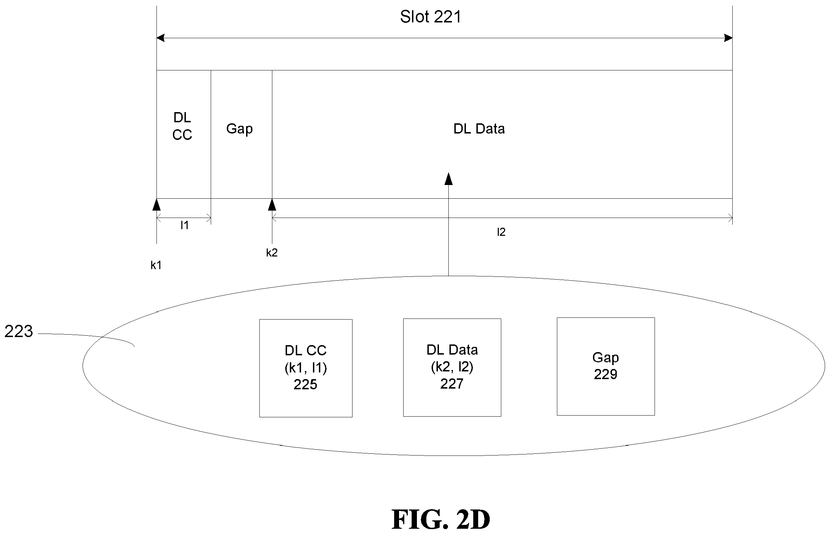

In some implementations, a message may only include parameters to indicate which components are to be included in the preliminary slot structure without defining their respective locations. For example, FIG. 2A shows an exemplary diagram of a preliminary slot structure 201. The message 203 indicates that the preliminary slot structure 201 includes a downlink (DL) control channel (CC) component 205, a downlink (DL) data component 207, and a gap component 209. The specific locations of these components intentionally remain undefined by design to provide flexibility for adapting the slot structure. These locations can be further defined using additional parameters, such as an offset with respect to the beginning of the slot or a length of the component for each of the components.

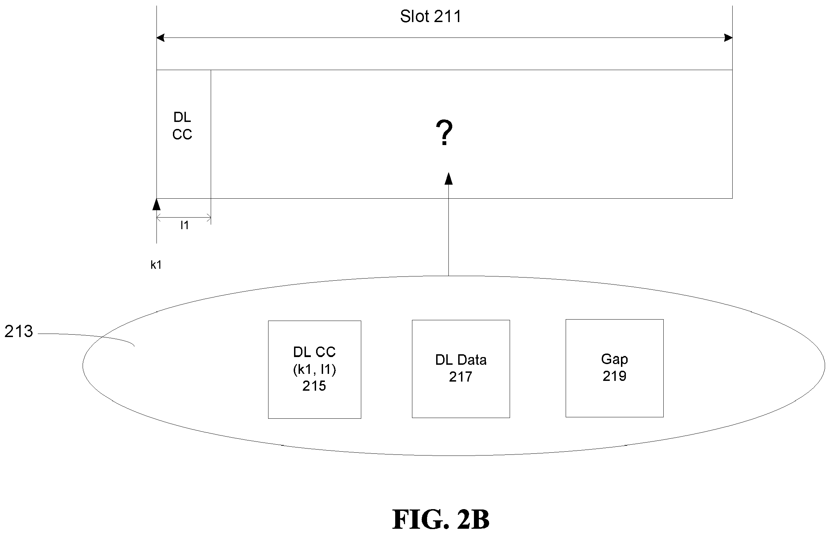

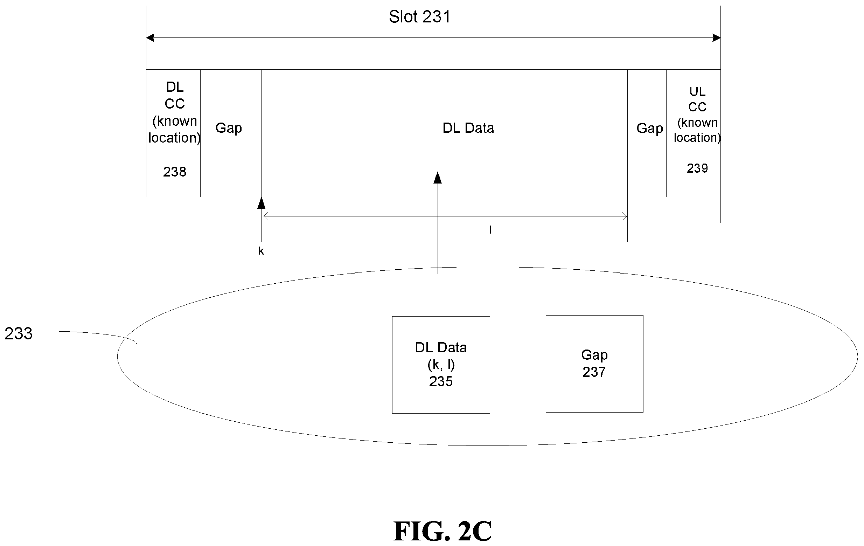

In some implementations, the message may include parameters to indicate locations for at least one of the components. For example, as shown in an example in FIG. 2B, the message 213 indicates that a preliminary slot structure 211 includes a DL CC component 215, a DL data component 217, and a gap component 217. The message 213 further includes two parameters, k1 and 11, for the DL CC component 215 to indicate its offset (k1) with respective to the beginning of the slot and its duration (11). In this example, the preliminary slot structure 211 is partially defined by having a component DL CC with a known location, and two components (DL data 217 and gap 219) with unknown locations to enable changes in performing an actual transmission. The positions of the DL. data component 217 and gap component 219 can be further ascertained using additional parameters, such as offset and duration values. For example, as shown in FIG. 2C, the positions of the DL control component 238 and UL control component 239 have been defined. The position of the DL data component 235 can be ascertained using parameters k and 1 included in the message 233. In some embodiments, after receiving the control message at position n in the time-domain, the receiving node of the message can determine based on a timing relationship value (e.g., k2) included in the control message (e.g. DCI message) that it can start using the slot structure indicated by the message at position n+k2. In a slot that includes seven OFDM symbols, k2 can be a positive integer such as 0, 1, 2, 3, 4, 5, and 6. The same principle also applies to slots having 14 OFDM symbols.

In some implementations, the message may contain all relevant parameters to fully define the preliminary slot structure. For example, a message 223 as shown in another example in FIG. 2C indicates that a preliminary slot structure 221 includes a DL CC component 225, a DL. data component 227, and a gap component 227. The message 223 also includes parameters k1, 11, k2 and 12 to define the locations of the DL CC component 225 and DL data component 227. For example, k1 is the offset of the DL CC component 225 with respect to the beginning of the slot, and 11 is its duration. Similarly, k2 is the offset of the DL data component 227 with respect to the beginning of the slot, and 12 is its duration. In some applications based on this example, the message may optionally include parameters for the gap component 229 to indicate its location. In this case, the receiver of the message (*e.g.* a user equipment) can deduce the location of the gap component 229 based on the other two components.

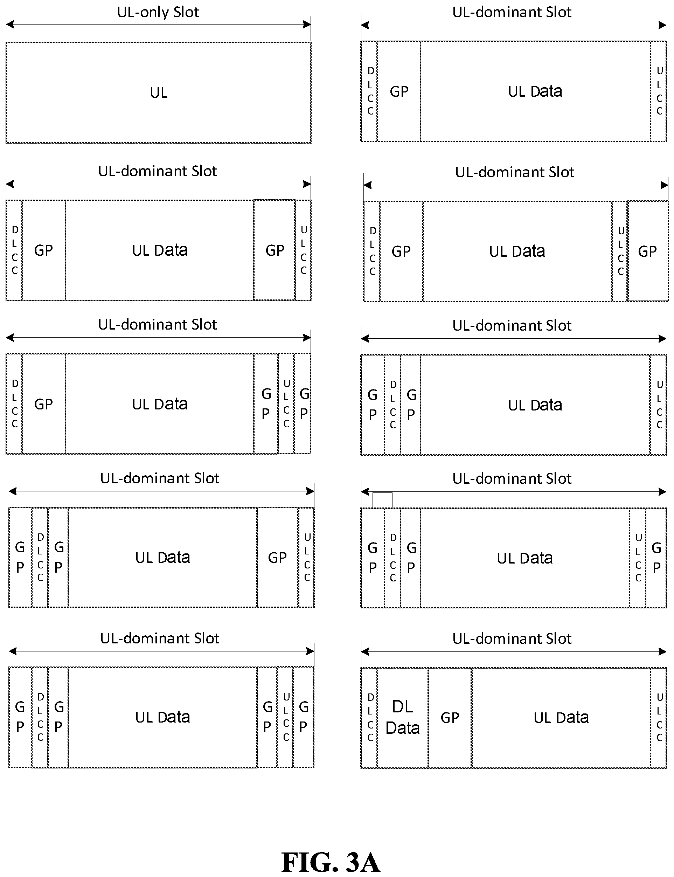

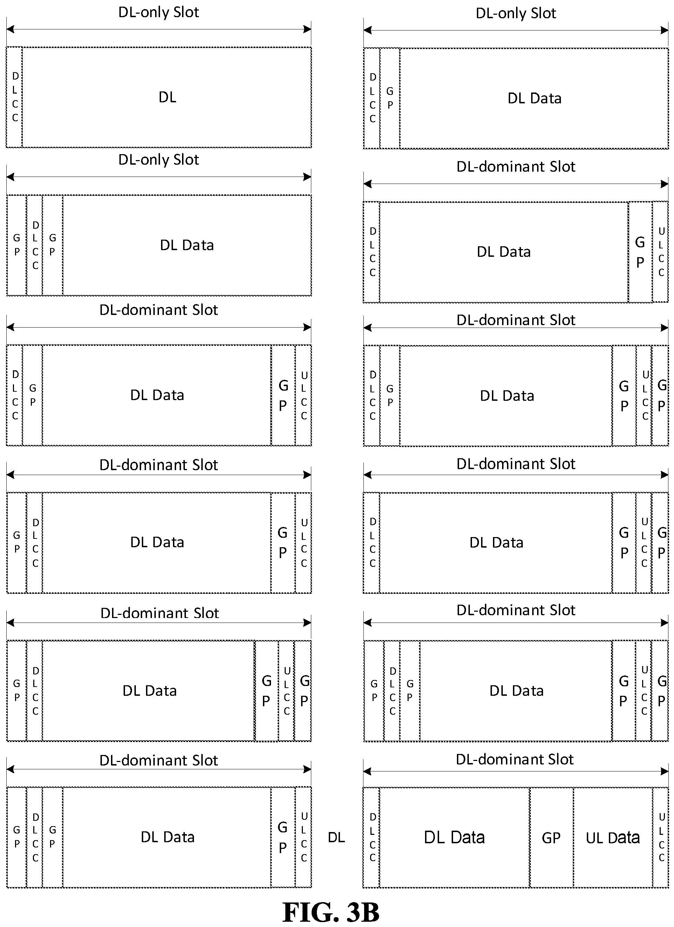

The gNodeB may decide the slot structures in real-time based on the network conditions. As a specific example, the gNodeB may also select a set of predetermined slot structures to be used for its transmission. For example, FIG. 3A illustrates some exemplary UL-only and UL-dominant slot structures, and FIG. 3B illustrates some exemplary DL-only and DL-dominant slot structures.

If the gNodeB selects a set of predetermined slot structures to be used for its transmission, it can first communicate the set of predetermined slot structures to its UEs using control messages. Accordingly, subsequent messages from this the gNodeB to the UEs can indicate slot structures which may include an index parameter only to identify which structure is to be used for the upcoming transmission. The gNodeB may also periodically select a different slot structure from the predetermined set. In some circumstances, the gNodeB may communicate the periodical schedule to the UEs prior to the start of transmission so that there is no need to send subsequent messages to UEs each time the selection changes.

In implementing the presently disclosed technology, a gNodeB may use a variety of parameters to indicate the one or more components. The gNodeB may also use additional parameters to indicate locations for at least one component included in a slot structure. Such parameters can be used independently or in combination to ensure that locations of the components are properly defined in the slot structure. Some of the parameters that a gNodeB can use include:
1. Offset. An offset value can indicate an offset with respect to the beginning of the slot, or with respective to a component within the slot. The offset can be represented in time duration, or a number of symbols in the slot structure.
2. Duration. A duration value can be a time duration or a number of symbols that the component occupies within the slot.
3. Begin position. A begin position is a value to indicate the beginning of the component. For example, it can be a time value relative to an end of a previous component. The begin position can also be represented in a number of symbols.
4. End position. An end position is a value to indicate the end of the component. Similar to begin positon, an end position can be a time value relative to a beginning of a previous component. The end position can also be represented in a number of symbols.
5. Absolute position. An absolute position value can indicate the start location of the component. For example, for a slot that contains seven OFDM symbols, a value between 0 to 6 can be used as an absolute position field to indicate the location of the symbol.
6. Relative position. A relative position value can also be used to indicate the start location of the component. The definition of relative position is similar to offset and, in some cases, can be interchanged with offset. For example, a relative value of *k* can indicate that component A starts k symbols from the start of the previous component B. The value can also be relative to the start of the slot, the end of another component, or other types of positions.
7. Mode index. A mode index value can be used to indicate a particular slot structure from a set of predetermined slot structures to be used for transmission.

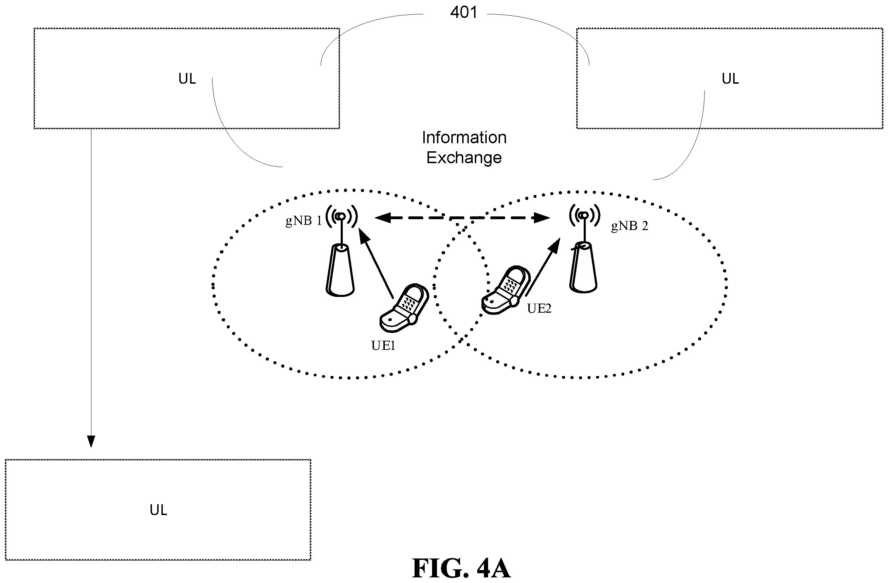

In operation, the gNodeB transmits a first message to its user equipment to indicate the preliminary slot structure. In some embodiments, the components of in the preliminary slot structure are fully defined. The gNodeB may subsequently evaluate network conditions and follow up with a second message to adjust or change the preliminary slot structure. For example, the gNodeB may perform an interference sensing and/or measurement operation to decide the proper slot structure to use. Features for the interference sensing and/or measurements are further described in details in connection of FIG. 4A to FIG. 6. After the gNodeB determines the final slot structure, the gNodeB sends a second message to inform the user equipment of the new slot structure or any adjustments and/or changes to the existing slot structure. Depending on the contents of the first message, the second message can include remaining parameters that are necessary to define the slot structure. Such parameters may include location information for one or more components of the slot and/or sensing and/or measurement operations. The second message may also be transmitted via Radio Resource Control (RRC) protocol, or as a part of downlink control information (DCI), such as downlink DCI, uplink DCI, or Common DCI, via Physical Downlink Control Channel (PDCCH) or Enhanced Physical Downlink Control Channel (ePDCCH) to user equipment.

Once the slot structure is fully defined, the gNodeB and its UEs can continue to use this defined slot structure for one or more slots during the transmission until the gNodeB or a corresponding UE obtains further information that triggers a change of the slot structure. For example, information that triggers a change of the slot structure includes statistical results from the monitoring of network conditions, such as a percentage of busy/idle time of the device, and average busy/idle ration, or an average interference level. In some implementations, upon determining that a change of the slot structure is necessary, the gNodeB can include parameters in a new message to change the previously defined slot structure. For example, the gNodeB can add a sensing and/or measurement operation in the slot based on the monitoring of network conditions. In some deployments, when a UE is capable of autonomously changing the slot structure on its end, the gNodeB can be structured to perform real-time examination of the slot structure to detect any changes.

### Sensing and/or Measuring

As a part of an implementation for adaptively changing the slot structure, the gNodeB can be operated to perform sensing and/or measurement in estimating the crosslink interference condition and to use the result of the sensing and/or measurement to assist the dynamic selection of a suitable or proper slot structure for mitigating the crosslink interference.

For example, the sensing and/or measurement may include different types of actions in connection of estimating the crosslink interference. First, as a part of the sensing and measurement, the gNodeB can exchange information with other adjacent base stations that use the same or overlapping spectrum resources to gather their transmission parameters. For example, a base station can exchange at least one of the following types of information with its adjacent base stations via the backbone network or OTA signal: the slot structure, location information for component of the slot structure, component information of the slot structure, duration information for component of the slot structure, transmission direction, beam information, frequency band, transmission power, measurement and/or sensing request, location information of sensing/measurement signal (e.g., frequency pattern, time domain location, sequence) an adjustable power range, and/or priority.

When a base station fails to obtain meaningful information from its adjacent nodes, or chooses to skip information exchange, the base station can perform a second type of action as a part of sensing and/or measurement by including a sensing and/or measurement operation field in its slot structure.

FIG. 4A shows an exemplary scenario when a base station decides a slot structure for its subsequent transmission based on information obtained from its adjacent base stations. In this example, gNB1 performs information exchange with gNB2 to obtain the information on whether gNB2 performs transmission in the same direction (*e.g.,* uplink) and uses the same slot structure (e.g., 401). In the particular example as illustrated, gNB1 decides to continue its current transmission without any changes to the slot structure (401) because the information from the adjacent base stations is sufficient for it to make a decision regarding the slot structure.

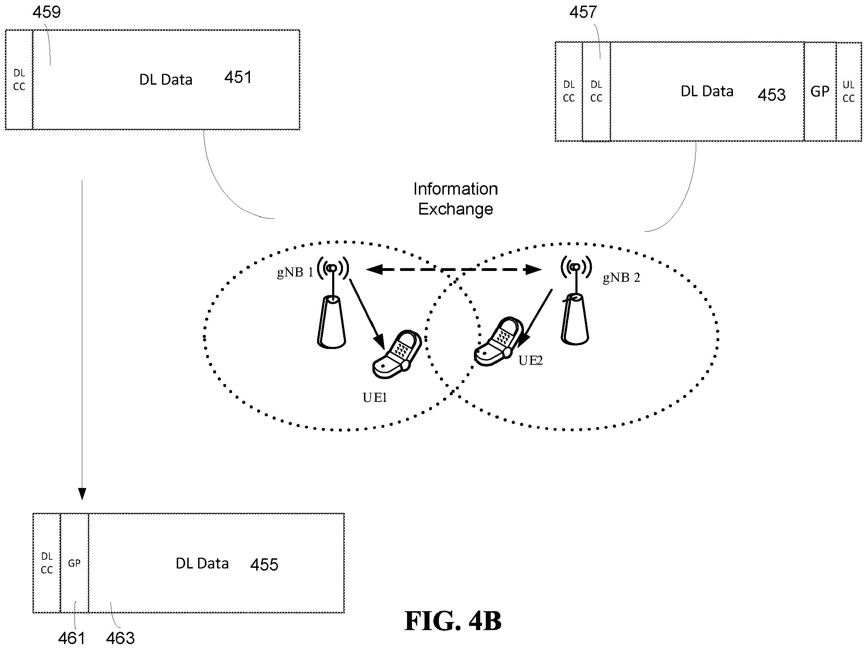

FIG. 4B shows another exemplary scenario when a base station decides a slot structure for its subsequent transmission. In this example, gNB1 also performs information exchange with gNB2 to obtain information on whether gNB2 performs transmission in the same direction (*e.g*., downlink) and but uses a different slot structure 453 from its own slot structure 451. In some embodiments, gNB1 collects statistics based on its monitoring of network conditions. For example, in this particular case, gNB1 decides, based on the monitoring of network conditions, that difference in the slot structures (*e.g*., interference between control 457 and data 459 transmission) causes a high amount of interference. gNB1 then changes its slot structure to add a gap 461 in order to align its control channel part with gNB2's control channel part. Alternatively, gNB1 may shift the start position of its data transmission, or preempt an initial portion of the data transmission to achieve the same effect. gNB1 can optionally perform a sensing and/or measurement operation before data transmission or at the beginning of the data transmission. The sensing and/or measurements operation and its corresponding position can be indicated by a message such as a DCI signaling. After gNB1 adjusts its slot structure, one or both of gNB1 and gNB2 may optionally perform interference measurements to ensure that the interference level does not exceed a predetermined threshold. In this particular example, however, gNB1 and gNB2 proceed directly to subsequent transmission of data without further interference measurements. In some cases, gNB1 may simply use the slot structure of gNB2 to ensure that data and/or control transmissions are aligned.

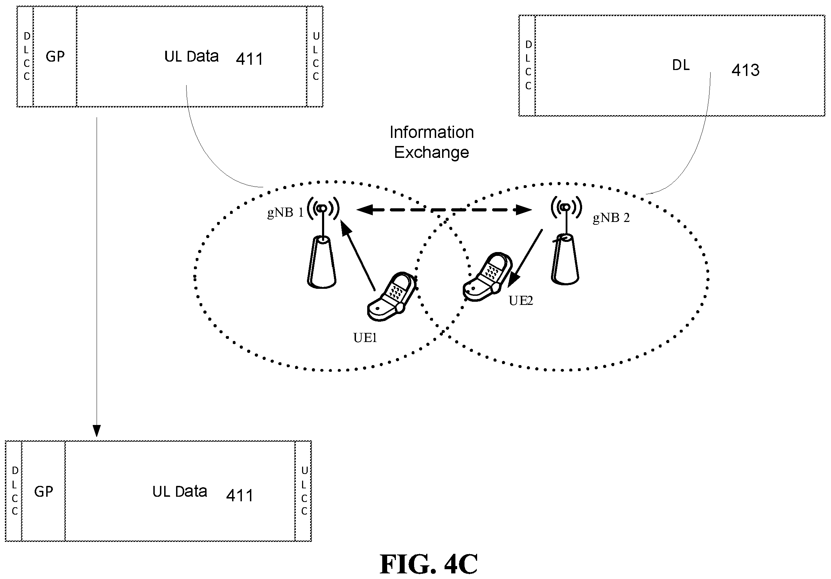

FIG. 4C shows another exemplary scenario when a base station decides a slot structure for its subsequent transmission. In this example, gNB1 performs information exchange with gNB2 and detects that gNB2 performs transmission in the opposite direction (*e.g.,* downlink). gNB2 also uses a different slot structure (413) as compared to gNB1 (411). Based on the monitoring of network conditions, it decides that the current interference level does not exceed a predetermined threshold. Therefore, gNB1 decides to continue its current transmission using the same slot structure (411), even though the adjacent gNB2 introduces some level of crosslink interference. Optionally, gNB1 may choose to adjust its beam direction to lower the interference level that it perceives. In some embodiments, gNB1 may send a message to gNB2, requesting gNB2 to lower its transmission power to mitigate crosslink interference. gNB1 may also adjust its own transmission power to minimize the impact of crosslink interference on its transmission. gNB1 may also send an interference sensing and/or measurement request/signal to gNB2 so that gNB2 can perform sensing and/or measurement. Upon receiving this request from gNB1, gNB2 may optionally change its slot structure to introduce a space (e.g., a gap component) between its DLCC component and DL data component to perform the sensing and/or measurement operation as requested. The exact location and length of the space can be indicated by a message, such as a DCI message.

FIG. 4D shows yet another exemplary scenario when a base station decides a slot structure for its subsequent transmission. Similar to the example shown in FIG. 4C, gNB1 performs information exchange with gNB2 and detects that gNB2 performs transmission in the opposite direction (*e.g*., downlink). gNB2 also uses a different slot structure (423) as compared to gNB1 (421). In this case, gNB1 decides, based on the monitoring of network conditions, that the current interference level exceeds a predetermined threshold. gNB1 then decides to change its slot structure to reduce the impact of crosslink interference. In this case, gNB1 decides to change its UL data transmission to DL data transmission in the slot structure 425 so that the subsequent transmission is performed in DL direction. After the decision, gNB1 sends a separate message containing relevant parameters to define the slot structure 425 to its user equipment. Optionally, gNB1 may also choose to adjust its beam direction or adjust its transmission power. In some embodiments, gNB1 can also send a message to gNB2, requesting gNB2 to lower its transmission power to mitigate crosslink interference.

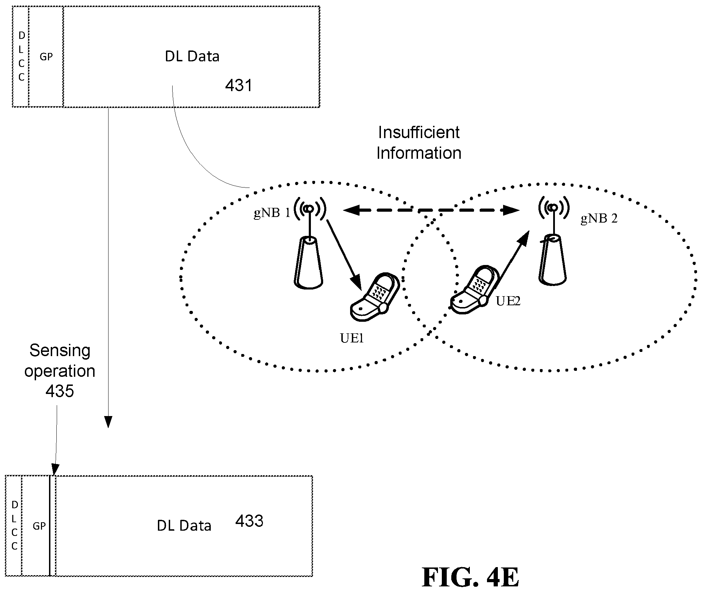

FIG. 4E shows an exemplary scenario when a base station adds a sensing and/or measurement operation to its slot structure for subsequent transmission. In this example, gNB1 does not gather sufficient information from the adjacent base station gNB2. This can happen when gNB1 chooses to not perform information exchange with its adjacent base stations, or when gNB1 fails to obtain information from the adjacent base stations. gNB1 decides, based on its monitoring of network conditions, that there is a substantial amount of interference that exceeds a predetermined threshold. In some circumstances, such as the example shown in FIG. 4E, gNB1 may change its slot structure 431 to 433 in order to include a sensing and/or measurement operation 435, to be performed before DL data transmission, wherein sensing and/or measurement operation and/or sensing position can be indicated and/or triggered by a message such as DCI signaling. The sensing and/or measurement operation 435 allows gNB1 to perform a sensing and/or measurement within the slot to evaluate the interference level. If the sensed interference is low (e.g., below a predetermined threshold level), gNB1 continues to transmit data. If the sensed interference is high (e.g., exceeding a predetermined threshold level), gNB1 may choose to back off and skips its transmission for the current slot. Alternatively, gNB1 also has the option to skip this sensing and/or measurement operation 435 even through sensing and/or measurement operation was indicated in the slot. Optionally, gNB1 may choose to adjust its beam direction or adjust its transmission power. In some circumstances, gNB1 can send a message to gNB2, requesting gNB2 to lower its transmission power to mitigate crosslink interference.

In some implementations, after gNB1 fails to obtain sufficient information from its adjacent base stations, gNB1 may choose to change its slot structure (431) directly to include a sensing and/or measurement operation 435. It then relies on the sensing and/or measurement operation performed within the slot to determine whether further changes to the slot structure are necessary or whether gNB can transmit or not.

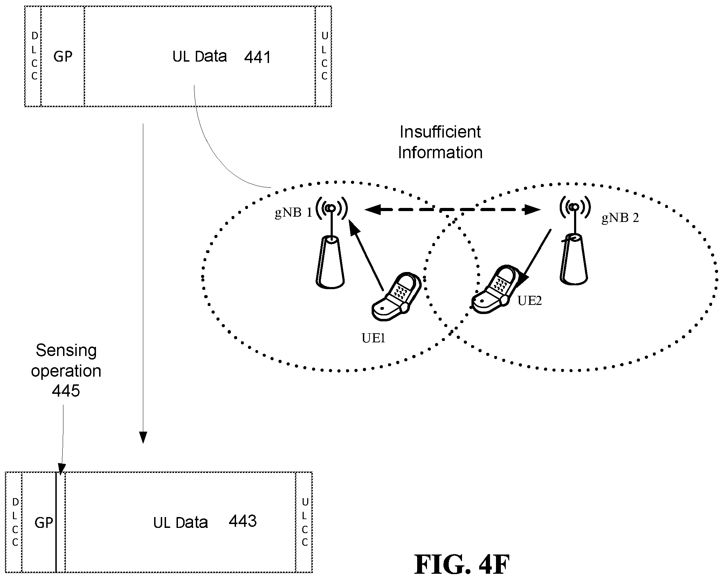

FIG. 4F shows another exemplary scenario when a sensing and/or measurement operation is introduced to the slot structure for UL-dominant transmission. In this example, the base station gNB1 can inform its UE1 via a control message (e.g., a DCI message) whether to perform a sensing and/or measurement operation, and if so, when the sensing and/or measurement operation should be performed within the slot. Upon receiving the message, UE1 may skip the sensing and/or measurement operation if it decides that its uplink data transmission has higher priority or the interference for the transmission is below a predetermined threshold based on its exchange of information with adjacent nodes. In some embodiments, UE1 can proceed to perform a sensing and/or measurement operation to detect an interference level, and make an autonomous decision to change subsequent slot structure if the detected interference level exceeds a predetermined threshold. In some implementations, UE may choose to report its sensing and/or measurements result to the corresponding gNB so that gNB can determined whether transmission should be skipped, or a change to the slot structure is necessary. Optionally, gNB1 may also choose to adjust its beam direction or adjust its transmission power. In some circumstances, gNB1 can send a message to aNB2, requesting gNB2 to lower its transmission power to mitigate crosslink interference. gNB1 may also send an interference sensing and/or measurement request/signal to gNB2 so that gNB2 can perform sensing and/or measurement in the position that gNB1 transmits sensing and/or measurement signal.

In order to include the sensing and/or measurement operation in the slot structure, gNB1 can send a separate message (e.g. DCI message) including parameters indicative of the sensing and/or measurement operation and its location within the slot. For example, the sensing and/or measurement operation can be positioned before channel control components and/or data component, within a gap component, or at the beginning of data component. If the sensing and/or measurement operation is positioned within a gap component, one or more bits can be used to indicate various possible locations of the sensing and/or measurement operation in the gap component. For example, a two-bit value can be used to indicate that the sensing and/or measurement operation is: (1) disabled if the value is 00, (2) enabled and positioned at the beginning of the gap component if the value is 01, (3) enabled and positioned in the middle of the gap component if the value is 10 (additional offset with respect to the beginning of the gap component may also be included), and (4) enabled and positioned at the end of the gap component if value is 11 (additional offset with respect to the beginning/end of the gap component may also be included). If the sensing and/or measurement operation is positioned within a data component, one or more bits can be used to indicate various possible locations of the sensing and/or measurement operation in the data component. For example, a two-bit value can be used to indicate that the sensing and/or measurement operation is: (1) disabled if the value is 00, (2) enabled and positioned before the data component if the value is 01, (3) enabled and positioned at the beginning of the data component if the value is 10, and (4) enabled and positioned at the end of the data component if value is 11. Similarly, one or more bits can be used to indicate various possible locations of the sensing and/or measurement operation within a slot. For example, a two-bit value can be used to indicate that the sensing and/or measurement operation is: (1) disabled if the value is 00, (2) enabled and positioned before the control component if the value is 01, (3) enabled and positioned within the gap component if the value is 10 (additional offset with respect to the beginning of the gap component may also be included, and (4) enabled and positioned at the end of the data component if value is 11. For example, Table 1 shows some exemplary parameters that can be used by orNB1 to signal the location of the sensing and/or measurement operation. Parameters in other forms, e.g. index number (0, 1, ...3), can also be used to indicate where the sensing and/or measurement operation should be placed within the slot and whether the operation is enabled/disabled.

**Table 1**

| No. | N Bits | **Sensing and/or measurement operation in Gap Component** |
|---|---|---|
| 1 | 00 | Disabled |
| | 01 | Enabled, positioned at the beginning of gap component |
| | 10 | Enabled, positioned in the middle of gap component (also including an offset with respect to the beginning of the gap component) |
| | 11 | Enabled, positioned at the end of the gap component (optionally including an offset with respect to the beginning of the gap component) |

| | | **Sensing and/or measurement operation in Data Component** |
|---|---|---|
| 2 | 00 | Disabled |
| | 01 | Enabled, positioned before the data component |
| | 10 | Enabled, positioned at the beginning of data component |
| | 11 | Enabled, positioned after the data component |

| | | **Sensing and/or measurement operation in the Slot** |
|---|---|---|
| 3 | 00 | Disabled |
| | 01 | Enabled, positioned before control component |
| | 10 | Enabled, positioned within the gap component (also including an offset with respect to the beginning of the gap component) |
| | 11 | Enabled, positioned before the data component |

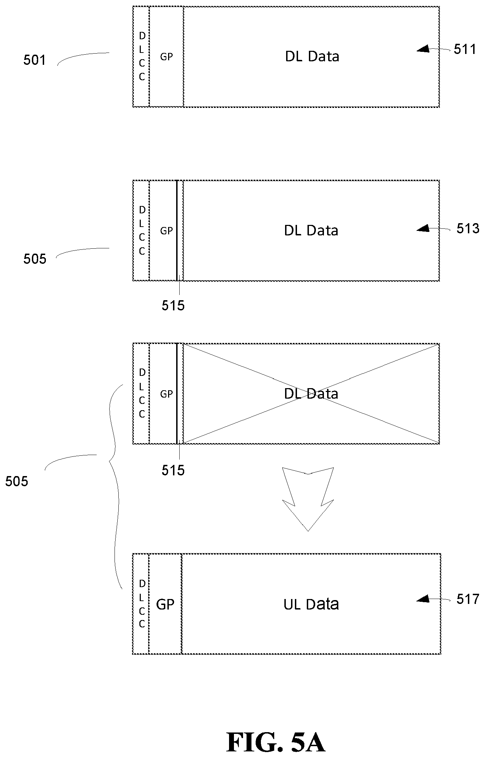

FIG. 5A shows an exemplary sequence of operations that can be performed by a base station for downlink-dominant transmissions. First, at 501, a base station sends a message including parameters to indicate a preliminary slot structure 511. In this case, the preliminary slot structure 511 has been fully defined by the parameters in the message. The base station can optionally exchange information with its adjacent base stations or, based on the monitoring of network conditions, to obtain interference level in the network. Then, at 505, the base station sends another message to add/introduce a sensing and/or measurement operation field 515 to the preliminary slot structure 511 to sense interference level for this slot. The base station and its user equipment then proceed to the subsequent transmission using the new slot structure 513. In the particular embodiment shown in FIG. 5A, during the downlink transmission, the base station performs, at 505, a sensing and/or measurement operation as indicated by the sensing field 515 by detecting an interference level and determining whether the detected interference level exceeds a predetermined threshold. The base station then decides whether to change the slot structure 517 to uplink data transmission to reduce the impact of crosslink interference. For example, when the detected interference level exceeds the predetermined threshold, the base station can be triggered to change the remaining portion of the slot structure 517 to uplink data transmission; conversely, when the detected interference level does not exceed the predetermined threshold, the base station can maintain the same slot structure for the remaining portion of the slot structure 517.

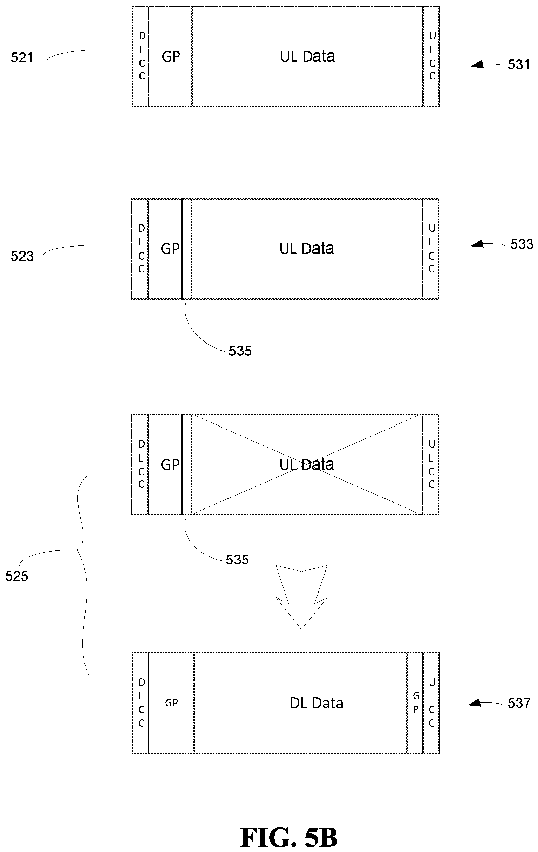

FIG. 5B shows an exemplary sequence of operations that can be performed by a base station and its corresponding user equipment for uplink-dominant transmissions. First, at 521, a base station sends a message including parameters to indicate a preliminary slot structure 531. In this case, the preliminary slot structure 531 is completely defined by the parameters included in the message. The base station may optionally exchange information with its adjacent base stations or sense an interference level in the network. Then, at 523, the base station sends another message to add a sensing and/or measurement operation field 535 to the preliminary slot structure 531 to form a new slot structure 533. The base station and its user equipment then proceed to the subsequent transmission using the new slot structure 533. In the particular embodiment shown in FIG. 5B, during the uplink transmission, a user equipment performs, at 525, a sensing and/or measurement operation as indicated by the sensing field 535 and detects an interference level that exceeds a predetermined threshold. The user equipment and/or gNB proceeds to change the UL-dominant slot structure 533 to a DL-dominant slot structure 537 in order to reduce the impact of crosslink interference. For example, using the DL-dominant slot structure 537, the gNB performs DL data transmission, while optionally keeping the position of the UL control channel unchanged.

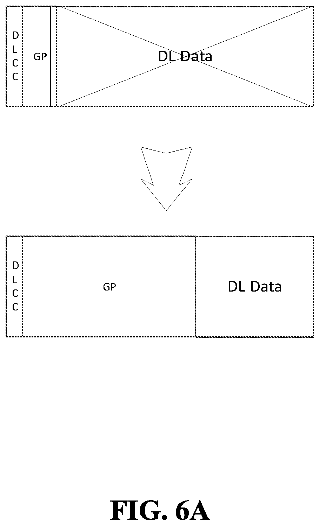

In some implementations, instead of changing the direction of transmission in the slot structure, the base station can choose to postpone data transmission for a short period of time to avoid high interference level. For example, FIG. 6A shows an exemplary change to the slot structure that postpones the DL data transmission within the slot. In some embodiments, the data transmission for the current slot is postponed. Such delay can even be extended to the next slot if necessary. In some cases, the gNB can add a sensing and/or measurement operation to the beginning of the next slot or transmission so that a sensing and/or measurement operation can be performed to ascertain if additional delay or skip transmission is necessary.

In some embodiments, data transmission can span across multiple slots. For example, if the gNB performs sensing and/or measurements and detects an interference level that exceeds a predetermined threshold, it can choose to back off and skip transmission for the current slot and continue in the next one. This allows the adjacent gNBs to continue transmission for the current slot without being interfered. Optionally, the gNB sends a message to indicate a change of the structure for the next slot. For example, the gNB can add a sensing and/or measurement operation to the beginning of the next slot while maintaining the direction of transmission in the next slot. The gNB may also change the direction of the transmission in the next slot based on historical statistics, such as based on the sensing results in the previous a slot.

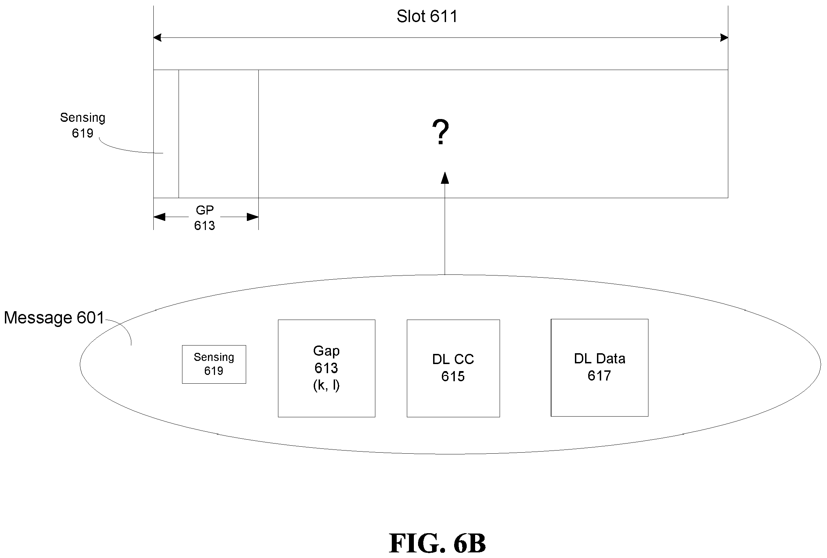

In some embodiments, the sensing and/or measurement operation can be included in the preliminary slot structure that is not fully defined. FIG. 6B shows an exemplary message 601 that indicates that a preliminary structure 611. The preliminary structure 611 includes a gap component 613, a DL CC component 615, and a DL data component 617. The message 611 includes two parameters, k and 1, for the gap component 613 to define its position in the slot (e.g., at the beginning of the slot). In addition, the message 601 also includes an indicator 619 to suggest that a sensing and/or measurement operation should be placed at the beginning of the gap component 613. The positions of the other components remain undefined in this preliminary slot structure 611. With this partially defined preliminary slot structure 611, the gNB can perform a sensing and/or measurement operation first and then decide the positions of other components in the slot. It can also replace certain components in the slot based on the sensing results.

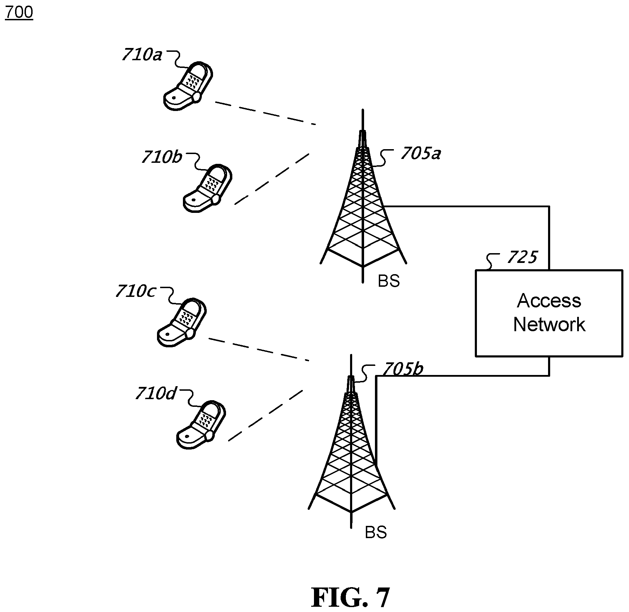

FIG. 7 shows an example of a wireless communication system where techniques in accordance with one or more embodiments of the present technology can be applied. A wireless communication system 100 can include one or more base stations (BSs) 705a, 705b, one or more wireless devices 710a, 710b, 710c, 71 0d, and an access network 125. A base station 705a, 705b can provide wireless service to wireless devices 710a, 71 0b, 710c and 710d in one or more wireless sectors. In some implementations, a base station 705a, 705b includes directional antennas to produce two or more directional beams to provide wireless coverage in different sectors.

The access network 725 can communicate with one or more base stations 705a, 705b. In some implementations, the access network 725 includes one or more base stations 705a, 705b. In some implementations, the access network 725 is in communication with a core network (not shown in FIG. 7) that provides connectivity with other wireless communication systems and wired communication systems. The core network may include one or more service subscription databases to store information related to the subscribed wireless devices 710a, 710b, 710c and 710d. A first base station 705a can provide wireless service based on a first radio access technology, whereas a second base station 705b can provide wireless service based on a second radio access technology. The base stations 705a and 705b may be co-located or may be separately installed in the field according to the deployment scenario. The access network 725 can support multiple different radio access technologies.

In some implementations, a wireless communication system can include multiple networks using different wireless technologies. A dual-mode or multi-mode wireless device includes two or more wireless technologies that could be used to connect to different wireless networks.

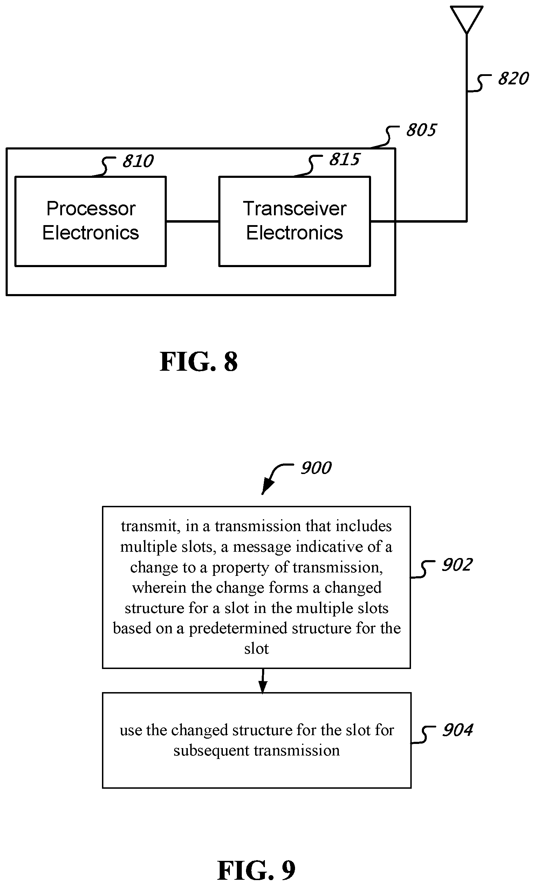

FIG. 8 is a block diagram representation of a portion of a radio station. A radio station 805 such as a base station or a wireless device can include processor electronics 810 such as a microprocessor that implements one or more of the wireless techniques presented in this document. The radio station 805 can include transceiver electronics 815 to send and/or receive wireless signals over one or more communication interfaces such as antenna 820. The radio station 805 can include other communication interfaces for transmitting and receiving data. Radio station 805 can include one or more memories configured to store information such as data and/or instructions. In some implementations, the processor electronics 810 can include at least a portion of the transceiver electronics 815. In some embodiments, at least some of the disclosed techniques, modules or functions are implemented using the radio station 805.

FIG. 9 is a flowchart representation of a method 900 of wireless communication. The method 900 may be implemented at a radio station. More specifically, the method 900 can be implemented at a base station, e.g., gNB1 shown in FIGS. 4A-4F.

The method 900 includes, at 902, transmitting, in a transmission that includes one or more slots, a message indicative of a change to a property of transmission, wherein the change forms a changed structure for a slot in the one or more slots based on a predetermined structure for the slot; and, at 904, using the changed structure for the slot for subsequent transmission.

In some embodiments, the property of transmission includes a plurality of parameters indicative of properties of one or more components of the slot. The property of transmission can include a value associated to a structure in a set of pre-selected structures to indicate the changed structure. The property of transmission can be a direction of the transmission. The property of transmission can also include an indicator of an operation to be performed during the transmission to sense an interference of the transmission.

In some embodiments, the method further includes obtaining, prior to the transmitting of the message, information of an operational condition of the transmission. The obtaining information of the operational condition of the transmission includes exchanging, with an adjacent network station, information indicative of properties of the transmission. The obtaining information of the operational condition of the transmission also includes detecting an interference level of the transmission.

In some embodiments, the message is transmitted periodically using a predetermined period. The method may further includes transmitting the predetermined period using Radio Resource Control (RRC) protocol.

The method can be implemented at a wireless communication base station that includes a memory that stores instructions for operations of the base station and a processor that is in communication with the memory. When the processor reads and executes the instructions, it causes the base station to transmit, from the base station, parameters indicative of properties of one or more components that form a predetermined structure of a slot for transmission from the base station to a mobile station. In some embodiments, the parameters include a sensing field which indicates whether a sensing and/or measurement operation of sensing interference of the transmission to be performed at the base station is selectively enabled based on an operational condition of the base station. The processor can also cause the base station to initiate, from the base station, transmission based on the predetermined structure of the slot. When the sensing field indicates the sensing and/or measurement operation at the base station is enabled, the base station can sense an interference at the base station to determine whether the sensed interference reaches an interference threshold. When the sensed interference does not exceed the interference threshold, the base station can use the predetermined structure of slot for transmission. On the other hand, when the sensed interference exceeds the interference threshold, the base station is operable to change the predetermined structure of the slot to send subsequent transmission using the changed structure of the slot. When the sensing field indicates the sensing and/or measurement operation at the base station is not enabled, the base station can continue to send transmission based on the predetermined structure of the slot.

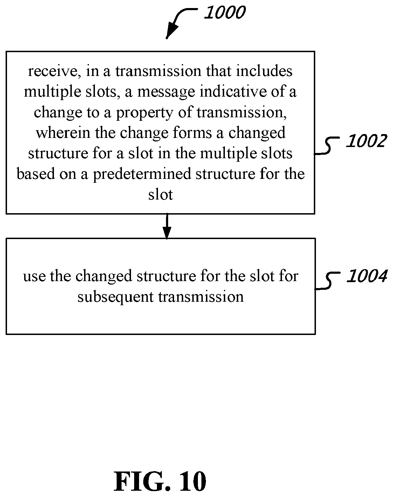

FIG. 10 is a flowchart representation of another method of wireless communication. The method 1000 may be implemented at a radio station. More specifically, the method 1000 can be implemented at a mobile station, e.g., UE1 shown in FIGS. 4A-4F.

The method 1000 includes, at 1002, receiving, in a transmission that includes one or more slots, a message indicative of a change to a property of transmission, wherein the change forms a changed structure for a slot in the one or more slots based on a predetermined structure for the slot; and, at 1004, using the changed structure for the slot for subsequent transmission.

In some embodiments, the property of transmission includes a plurality of parameters indicative of properties of one or more components of the slot. The property of transmission can include a value associated to a structure in a set of pre-selected structures to indicate the changed structure. The property of transmission can be a direction of transmission. The property of transmission can also include an indicator of an operation to be performed during the transmission to sense an interference of the transmission.

In some embodiments, the method further includes sensing, based on the indicator of the operation, an interference of the transmission; and using a new structure for the slot for subsequent transmission, wherein the new structure is determined based on the sensed interference of the transmission and different from the changed structure.

The method can be implemented at a wireless communication mobile station that includes a memory that stores instructions for operations of the mobile station, and a processor in communication with the memory. When the processor reads and executes the instructions, it causes the motion station to receive, at the mobile station, parameters from a serving base station indicative of properties of one or more components that form a predetermined structure of a slot for transmission from the mobile station to the serving base station. The received parameters can include a sensing field which indicates whether a sensing and/or measurement operation to be performed at the mobile station is selectively enabled based on an operational condition of the base station. The mobile station is also operable to determine, from the received parameters, the properties of the one or more components so as to ascertain the predetermined structure of the slot. In some embodiments, the mobile station can initiate, from the mobile station, transmission based on the predetermined structure of the slot. When the sensing field indicates the sensing and/or measurement operation at the mobile station is enabled, the mobile station can sense interference at the mobile station to determine whether the sensed interference reaches an interference threshold. When the sensed interference does not exceed an interference threshold, the mobile station uses the predetermined structure of slot for the transmission. On the other hand, when the sensed interference exceeds the interference threshold, the mobile station changes the predetermined structure of the slot to send subsequent transmission using the changed structure of the slot. Also, when the sensing field indicates the sensing and/or measurement operation at the mobile station is not enabled, the mobile station continues to send transmission based on the predetermined structure of the slot.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

Only a few implementations and examples are described and other implementations, enhancements and variations can be made as far as they are within the scope defined by the appended claims.

## Claims

1. A wireless communication method performed by a base station, comprising:
performing transmissions that include one or more slots, wherein the slots have a predetermined structure; transmitting a message indicative of a change to a property of subsequent transmissions, wherein the change forms a changed structure for a slot in the one or more slots based on the predetermined structure for the slot; and
using the changed structure for the slot for the subsequent transmissions,
wherein the property of the subsequent transmissions includes at least one of a plurality of parameters indicative of properties of one or more components of the slot, a value associated to a structure in a set of pre-selected structures to indicate the changed structure, a direction of the transmission or an indicator of an operation to be performed during the transmission to sense an interference of the transmission,
wherein the message is transmitted using the Radio Resource Control, RRC, protocol,
further comprising:
obtaining, prior to the transmitting of the message, information of an operational condition of the transmissions,
wherein the obtaining information of the operational condition of the transmissions includes detecting an interference level of the transmissions, and
deciding the slot structure to use for the subsequent transmissions based on the detected interference level.

2. A wireless communication method performed by a mobile station, comprising:
receiving from a base station,
a transmission that includes one or more slots, wherein the slots have a predetermined structure; receiving a message indicative of a change to a property of subsequent transmissions,
wherein the change forms a changed structure for a slot in the one or more slots based on the predetermined structure for the slot, wherein, prior to the reception of the message,
the mobile station reports an interference level to the base station based on a sensing and/or measurement operation indicated in the predetermined slot structure, and
using the changed structure for the slot for the subsequent transmissions,
wherein the property of the subsequent transmissions includes at least one of a plurality of parameters indicative of properties of one or more components of the slot, a value associated to a structure in a set of pre-selected structures to indicate the changed structure, a direction of transmission or an indicator of an operation to be performed during the transmission to sense an interference of the transmissions,
wherein the message is received using the Radio Resource Control, RRC, protocol, and the method further comprises receiving scheduling information about the subsequent transmissions using the Radio Resource Control, RRC, protocol.

3. The wireless communication method of claim 2, further comprising:
sensing, based on the indicator of the operation, an interference of the transmission; and
using a new structure for the slot for subsequent transmission, wherein the new structure is determined based on the sensed interference of the transmission and different from the changed structure.

4. A wireless communication base station, comprising:
a memory that stores instructions for operations of the base station, and
a processor in communication with the memory and operable to execute the instructions to cause the base station to:
perform transmissions that include one or more slots, wherein the slots have a predetermined structure;
transmit a message indicative of a change to a property of subsequent transmissions,
wherein the change forms a changed structure for a slot in the one or more slots based on the predetermined structure for the slot; and
use the changed structure for the slot for the subsequent transmissions,
wherein the property of the subsequent transmissions includes a plurality of parameters indicative of properties of one or more components of the slot, a value associated to a structure in a set of pre-selected structures to indicate the changed structure, a direction of the transmission or an indicator of an operation to be performed during the transmission to sense an interference of the transmission,
wherein the message is transmitted using the Radio Resource Control, RRC, protocol.,
wherein the processor is operable to: execute the instructions to cause the base station to obtain, prior to the transmitting of the message, information of an operational condition of the transmissions,
wherein, to obtain information of the operational condition of the transmissions includes to detect an interference level of the transmissions, and to decide the slot structure to use for the subsequent transmissions based on the detected interference level.

5. A wireless communication mobile station, comprising:
a memory that stores instructions for operations of the mobile station, and
a processor that is in communication with the memory and operable to execute the instructions to cause the mobile station to:
receive from a base station,
a transmission that includes one or more slots, wherein the slots have a predetermined structure;
receiving a message indicative of a change to a property of subsequent transmissions,
wherein the change forms a changed structure for a slot in the one or more slots based on the predetermined structure for the slot, wherein, prior to the reception of the message,
the mobile station is configured to report an interference level to the base station based on a sensing and/or measurement operation indicated in the predetermined slot structure, and
use the changed structure for the slot for the subsequent transmissions,
wherein the property of the subsequent transmissions includes at least one of a plurality of parameters indicative of properties of one or more components of the slot, a value associated to a structure in a set of pre-selected structures to indicate the changed structure, a direction of transmission or an indicator of an operation to be performed during the transmission to sense an interference of the transmission,
wherein the message is received using the Radio Resource Control, RRC, protocol, and the processor is further configured to cause the mobile station to receive scheduling information about the subsequent transmissions
using the Radio Resource Control, RRC, protocol.

6. The wireless communication mobile station of claim 5, wherein the processor is operable to execute the instructions to cause the mobile station to:
sense, based on the indicator of the operation, an interference of the transmission; and
use a new structure for the slot for subsequent transmission, wherein the new structure is determined based on the sensed interference of the transmission and different from the changed structure.

## Patentansprüche

1. Drahtloses Kommunikationsverfahren, das von einer Basisstation durchgeführt wird, das aufweist:
Durchführen von Übertragungen, die einen oder mehrere Schlitze enthalten, wobei die Schlitze eine vorbestimmte Struktur aufweisen;
Übertragen einer Nachricht, die eine Änderung einer Eigenschaft nachfolgender Übertragungen anzeigt, wobei die Änderung eine geänderte Struktur für einen Schlitz in dem einen oder den mehreren Schlitzen bildet, die auf der vorbestimmten Struktur für den Schlitz basiert; und
Verwenden der geänderten Struktur für den Schlitz für die nachfolgenden Übertragungen, wobei die Eigenschaft der nachfolgenden Übertragungen mindestens einen von mehreren Parametern, die Eigenschaften einer oder mehrerer Komponenten des Schlitzes anzeigen, einen Wert, der mit einer Struktur in einem Satz vorausgewählter Strukturen verbunden ist, um die geänderte Struktur anzuzeigen, eine Übertragungsrichtung oder einen Indikator einer Operation enthält, die während der Übertragung durchgeführt werden soll, um eine Interferenz der Übertragung zu erfassen,
wobei die Nachricht unter Verwendung des Funkressourcensteuerung, RRC, Protokolls übertragen wird,
das ferner aufweist:
Erhalten, vor dem Übertragen der Nachricht, von Informationen über eine Betriebsbedingung der Übertragungen, wobei das Erhalten von Informationen über die Betriebsbedingung der Übertragungen das Erfassen eines Interferenzpegels der Übertragungen aufweist, und
Entscheiden der Schlitzstruktur, die für die nachfolgenden Übertragungen verwendet werden soll, basierend auf dem erfassten Interferenzpegel.

2. Drahtloses Kommunikationsverfahren, das von einer Mobilstation durchgeführt wird, das aufweist:
Empfangen von einer Basisstation, einer Übertragung, die einen oder mehrere Schlitze enthält, wobei die Schlitze eine vorbestimmte Struktur aufweisen;
Empfangen einer Nachricht, die eine Änderung einer Eigenschaft nachfolgender Übertragungen anzeigt, wobei die Änderung eine geänderte Struktur für einen Schlitz in dem einen oder den mehreren Schlitzen bildet, die auf der vorbestimmten Struktur für den Schlitz basiert, wobei, vor dem Empfang der Nachricht, die Mobilstation einen Interferenzpegel an die Basisstation berichtet, der auf einer Erfassungs- und/oder Messoperation basiert, die in der vorbestimmten Schlitzstruktur angezeigt wird/werden, und
Verwenden der geänderten Struktur für den Schlitz für die nachfolgenden Übertragungen, wobei die Eigenschaft der nachfolgenden Übertragungen mindestens einen von mehreren Parametern, die Eigenschaften einer oder mehrerer Komponenten des Schlitzes anzeigen, einen Wert, der mit einer Struktur in einem Satz vorausgewählter Strukturen verbunden ist, um die geänderte Struktur anzuzeigen, eine Übertragungsrichtung oder einen Indikator einer Operation enthält, die während der Übertragung durchgeführt werden soll, um eine Interferenz der Übertragung zu erfassen,
wobei die Nachricht unter Verwendung des Funkressourcensteuerung, RRC, Protokolls empfangen wird und das Verfahren ferner das Empfangen von Planungsinformationen über die nachfolgenden Übertragungen unter Verwendung des Funkressourcensteuerung, RRC, Protokolls aufweist.

3. Drahtloses Kommunikationsverfahren nach Anspruch 2, das ferner aufweist:
Erfassen, basierend auf dem Indikator der Operation, einer Interferenz der Übertragung; und
Verwenden einer neuen Struktur für den Schlitz für die nachfolgende Übertragung, wobei die neue Struktur basierend auf der erfassten Interferenz der Übertragung bestimmt wird und sich von der geänderten Struktur unterscheidet.

4. Drahtlose Kommunikationsbasisstation, die aufweist:
einen Speicher, der Anweisungen für Operationen der Basisstation speichert, und
einen Prozessor, der mit dem Speicher in Verbindung steht und betriebsfähig ist, die Befehle auszuführen, um die Basisstation zu veranlassen:
Übertragungen durchzuführen, die einen oder mehrere Schlitze enthalten, wobei die Schlitze eine vorbestimmte Struktur aufweisen;
Übertragen einer Nachricht, die eine Änderung einer Eigenschaft nachfolgender Übertragungen anzeigt, wobei die Änderung eine geänderte Struktur für einen Schlitz in dem einen oder den mehreren Schlitzen bildet, die auf der vorbestimmten Struktur für den Schlitz basiert; und
Verwenden der geänderten Struktur für den Schlitz für die nachfolgenden Übertragungen, wobei die Eigenschaft der nachfolgenden Übertragungen mehrere Parameter, die Eigenschaften von einer oder mehreren Komponenten des Schlitzes anzeigen, einen Wert, der mit einer Struktur in einem Satz vorausgewählter Strukturen verbunden ist, um die geänderte Struktur anzuzeigen, eine Übertragungsrichtung oder einen Indikator einer Operation enthält, die während der Übertragung durchgeführt werden soll, um eine Interferenz der Übertragung zu erfassen,
wobei die Nachricht unter Verwendung des Funkressourcensteuerung, RRC, Protokolls übertragen wird,
wobei der Prozessor betriebsfähig ist:
die Anweisungen auszuführen, um die Basisstation zu veranlassen, vor dem Übertragen der Nachricht Informationen über eine Betriebsbedingung der Übertragungen zu erhalten,
wobei das Erhalten von Informationen über die Betriebsbedingung der Übertragungen aufweist:
einen Interferenzpegel der Übertragungen zu erfassen, und
die Schlitzstruktur, die für die nachfolgenden Übertragungen verwendet werden soll, basierend auf dem erfassten Interferenzpegel zu entscheiden.

5. Drahtlose Kommunikationsmobilstation, die aufweist:
einen Speicher, der Anweisungen für Operationen der Mobilstation speichert, und
einen Prozessor, der mit dem Speicher in Verbindung steht und betriebsfähig ist, die Befehle auszuführen, um die Mobilstation zu veranlassen:
von einer Basisstation eine Übertragung zu empfangen, die einen oder mehrere Schlitze enthält, wobei die Schlitze eine vorbestimmte Struktur aufweisen;
eine Nachricht zu empfangen, die eine Änderung einer Eigenschaft nachfolgender Übertragungen anzeigt, wobei die Änderung eine geänderte Struktur für einen Schlitz in dem einen oder den mehreren Schlitzen bildet, die auf der vorbestimmten Struktur für den Schlitz basiert, wobei, vor dem Empfang der Nachricht die Mobilstation konfiguriert ist, einen Interferenzpegel an die Basisstation zu berichten, der auf einer Erfassungs- und/oder Messoperation basiert, die in der vorbestimmten Schlitzstruktur angezeigt wird/werden, und
die geänderte Struktur für den Schlitz für die nachfolgenden Übertragungen zu verwenden, wobei die Eigenschaft der nachfolgenden Übertragungen mindestens einen von mehreren Parametern, die Eigenschaften einer oder mehrerer Komponenten des Schlitzes anzeigen, einen Wert, der mit einer Struktur in einem Satz vorausgewählter Strukturen verbunden ist, um die geänderte Struktur anzuzeigen, eine Übertragungsrichtung oder einen Indikator einer Operation enthält, die während der Übertragung durchgeführt werden soll, um eine Interferenz der Übertragung zu erfassen, wobei die Nachricht unter Verwendung des Funkressourcensteuerung, RRC, Protokolls empfangen wird und der Prozessor ferner konfiguriert ist, die Mobilstation zu veranlassen, unter Verwendung des Funkressourcensteuerung, RRC, Protokolls Planungsinformationen über die nachfolgenden Übertragungen zu empfangen.

6. Drahtlose Kommunikationsmobilstation nach Anspruch 5, wobei der Prozessor betriebsfähig ist, die Anweisungen auszuführen, um die Mobilstation zu veranlassen:
basierend auf dem Indikator der Operation eine Interferenz der Übertragung zu erfassen; und
eine neue Struktur für den Schlitz für die nachfolgende Übertragung zu verwenden, wobei die neue Struktur basierend auf der erfassten Interferenz der Übertragung bestimmt wird und sich von der geänderten Struktur unterscheidet.

## Revendications

1. Procédé de communication sans fil exécuté par une station de base, comprenant :
l'exécution de transmissions comprenant un ou plusieurs créneaux, lesdits créneaux ayant une structure prédéterminée ;
la transmission d'un message indiquant une modification d'une propriété de transmissions ultérieures, ladite modification formant une structure modifiée pour un créneau dans le ou les créneaux sur la base de la structure prédéterminée pour le créneau ; et
l'utilisation pour les transmissions ultérieures de la structure modifiée pour le créneau, où la propriété des transmissions ultérieures comprend au moins un paramètre d'une pluralité de paramètres indiquant les propriétés d'un ou de plusieurs composants du créneau, une valeur associée à une structure dans un ensemble de structures présélectionnées pour indiquer la structure modifiée, une direction de la transmission ou un indicateur d'une opération à effectuer pendant la transmission pour détecter une interférence de la transmission,
où le message est transmis au moyen du protocole de commande de ressources radio (RRC),
comprenant en outre :
l'obtention, préalablement à la transmission du message, d'informations sur un état fonctionnel des transmissions, l'obtention d'informations sur l'état fonctionnel des transmissions comprenant la détection d'un niveau d'interférence des transmissions, et
la détermination de la structure de créneau à utiliser pour les transmissions ultérieures sur la base du niveau d'interférence détecté.

2. Procédé de communication sans fil exécuté par une station mobile, comprenant :
le réception d'une transmission d'une station de base comprenant un ou plusieurs créneaux, lesdits créneaux ayant une structure prédéterminée ;
la réception d'un message indiquant une modification d'une propriété de transmissions ultérieures, ladite modification formant une structure modifiée pour un créneau dans le ou les créneaux sur la base de la structure prédéterminée pour le créneau, où, préalablement à la réception du message, la station mobile signale un niveau d'interférence à la station de base sur la base d'une opération de détection et/ou de mesure indiquée dans la structure de créneau prédéterminée, et
l'utilisation pour les transmissions ultérieures de la structure modifiée pour le créneau, où la propriété des transmissions ultérieures comprend au moins l'un des paramètres indiquant les propriétés d'un ou de plusieurs composants du créneau, une valeur associée à une structure dans un ensemble de structures présélectionnées pour indiquer la structure modifiée, une direction de transmission ou un indicateur d'une opération à effectuer pendant la transmission pour détecter une interférence des transmissions,
où le message est reçu au moyen du protocole de commande de ressources radio, RRC, et où ledit procédé comprend en outre la réception d'informations de programmation sur les transmissions ultérieures au moyen du protocole de commande de ressources radio, RRC.

3. Procédé de communication sans fil selon la revendication 2, comprenant en outre :
la détection, sur la base de l'indicateur de l'opération, d'une interférence de la transmission ; et
l'utilisation pour la transmission ultérieure d'une nouvelle structure pour le créneau, ladite nouvelle structure étant déterminée sur la base de l'interférence détectée de la transmission et étant différente de la structure modifiée.

4. Station de base de communication sans fil, comprenant :
une mémoire stockant des instructions pour des opérations de la station de base, et
un processeur en communication avec la mémoire et activable pour exécuter les instructions entraînant la station de base à :
effectuer des transmissions comprenant un ou plusieurs créneaux, lesdits créneaux ayant une structure prédéterminée ;
transmettre un message indiquant une modification d'une propriété des transmissions ultérieures, ladite modification formant une structure modifiée pour un créneau dans le ou les créneaux sur la base de la structure prédéterminée pour le créneau ; et
utiliser pour les transmissions ultérieures la structure modifiée pour le créneau,
où la propriété des transmissions ultérieures comprend une pluralité de paramètres indiquant des propriétés d'un ou de plusieurs composants du créneau, une valeur associée à une structure dans un ensemble de structures présélectionnées pour indiquer la structure modifiée, une direction de la transmission ou un indicateur d'une opération à effectuer pendant la transmission pour détecter une interférence de la transmission,
où le message est transmis au moyen du protocole de commande de ressources radio, RRC,
où le processeur est activable pour exécuter les instructions entraînant la station de base à obtenir, préalablement à la transmission du message, des informations sur un état fonctionnel des transmissions,
où l'obtention d'informations sur l'état fonctionnel des transmissions comprend la détection d'un niveau d'interférence des transmissions, et
détermine la structure du créneau à utiliser pour les transmissions ultérieures sur la base du niveau d'interférence détecté.

5. Station mobile de communication sans fil, comprenant :
une mémoire stockant des instructions pour les opérations de ladite station mobile, et
un processeur en communication avec la mémoire et activable pour exécuter les instructions entraînant la station mobile à :
recevoir d'une station de base une transmission comprenant un ou plusieurs créneaux, lesdits créneaux ayant une structure prédéterminée ;
recevoir un message indiquant une modification d'une propriété de transmissions ultérieures, ladite modification formant une structure modifiée pour un créneau dans le ou les créneaux sur la base de la structure prédéterminée pour le créneau, où, préalablement à la réception du message, ladite station mobile est configurée pour signaler un niveau d'interférence à la station de base sur la base d'une opération de détection et/ou de mesure indiquée dans la structure de créneau prédéterminée, et
utiliser pour les transmissions ultérieures la structure modifiée pour le créneau,
où la propriété des transmissions ultérieures comprend au moins l'un des paramètres indiquant les propriétés d'un ou de plusieurs composants du créneau, une valeur associée à une structure dans un ensemble de structures présélectionnées pour indiquer la structure modifiée, une direction de transmission ou un indicateur d'une opération à effectuer pendant la transmission pour détecter une interférence de la transmission,
où le message est reçu au moyen du protocole de commande de ressources radio, RRC, et le processeur est en outre configuré pour entraîner la station mobile à recevoir des informations de programmation sur les transmissions ultérieures au moyen du protocole de commande des ressources radio, RRC.

6. Station mobile de communication sans fil selon la revendication 5, où le processeur est activable pour exécuter les instructions entraînant la station mobile à :
détecter, sur la base de l'indicateur de l'opération, une interférence de la transmission ; et utiliser pour une transmission ultérieure une nouvelle structure pour le créneau, ladite nouvelle structure étant déterminée sur la base de l'interférence détectée de la transmission et étant différente de la structure modifiée.
